# EUROPEAN PATENT APPLICATION

(11) **EP 3 415 263 A1**
(43) Date of publication of application: **19.12.2018**
(21) Application number: 17020346.7
(22) Date of filing: 08.08.2017
(51) Int. Cl.: B23K 26/122, B23K 26/38, B23K 26/142

(54) **METHOD AND APPARATUS FOR LASER CUTTING AND USE OF CARBON DIOXIDE AS AN ASSIST FLUID FOR LASER CUTTING**

(30) Priority: 12.06.2017 GB 201709303
(71) Applicant: Linde Aktiengesellschaft, 80331 München (DE)
(72) Inventor: Fieret, Jim, Orpington, BR6 8DT (GB)

(57) **Abstract**

The invention relates to a method for laser cutting a meltable material, comprising heating and melting at least a part of the meltable material at a laser cutting spot (44) by using a laser beam (34) directed towards the laser cutting spot (44), and removing at least a part of the meltable material molten by the laser beam (34) by using an assist fluid jet (44), which is at least partially directed towards the laser cutting spot. The assist fluid jet (52) comprises liquefied carbon dioxide and the assist fluid jet (52) is provided at the laser cutting spot (44) at least partially in a liquid phase and at a higher pressure than an ambient pressure at the laser cutting spot (44). The invention further relates to an apparatus (30) for laser cutting and the use of liquefied carbon dioxide as an assist fluid (48) for laser cutting.

## Description

### Technical Field

The invention relates to a method and an apparatus for laser cutting and other methods for treatments of materials by means of lasers, such as drilling. In particular, the invention is located in the technical field of laser cutting in deep water.

### Prior Art

Laser cutting uses a laser beam to ablate material by disposing energy by means of a laser beam. Some methods use pulsed laser sources providing for instance laser pulses having pulse durations in the millisecond, microsecond or femtosecond time range and having high peak intensities of the laser pulses combined with modest average intensities of the laser beams. In the cutting spot, the material often evaporates due to the absorbed laser pulse energy.

For example, in prior art, a technique known under the brand name MICROJET (Synova S.A., Switzerland) is available, which uses pulsed lasers for ablating material from a workpiece, wherein the pulsed laser beam propagates through a water jet, which guides the laser beam similar to an optical fiber. The water jet having a low pressure is further used to continuously cool the cutting zone.

Other methods for laser cutting often use continuous wave (cw) laser radiation for heating up and melting the material in the cutting spot and using an assist gas jet for removing the molten material from the cutting spot. These methods often realize the removal of the molten material by a melt-shear removal, wherein the molten material is blown out by the assist gas jet, for which a high momentum and/or a high velocity of the assist gas is required. Conventionally, various gaseous mediums are used as assist gas.

The latter method is also used for laser cutting under water under modest hyperbaric conditions, which, thus, is limited to modest pressures and therefore to shallow water depths of only few meters. This method uses the assist gas jet to remove also the ambient water along the optical path of the outcoupled laser beam and around the cutting spot to essentially obtain similar conditions at the cutting spot as present in a dry surrounding, i.e. not under water. Thus, for laser cutting under water at modest hyperbaric conditions, the process is essentially the same as laser cutting under dry conditions, with the exception that the equipment may be modified to be compatible with a wet environment. In these methods for dry and modest under water laser cutting, the laser beam is focused to a small cutting spot, and a preferably coaxial jet of assist gas is used to assist the process. The assist gas jet essentially creates a water-free zone around the cutting spot and/or in a cut kerf, and the cutting process is therefore the same as when applied above water under dry conditions. As an assist gas various gases can be used, such as oxygen, nitrogen, argon or air.

These methods for laser cutting suffer from the disadvantage that the operability under water is very limited, as explained below, since either these techniques are not suitable at all for underwater operation or the maximum depth of underwater operation is limited to only few meters.

Therefore, it is the technical problem of the present invention to provide a method and an apparatus for laser cutting, which is operable also under water at depths of more than only a few meters, in particular more than about 400 meters and/or at ambient pressures higher than about 40 bar.

This object is achieved by a method and an apparatus having the features of the respective independent claims. Preferred embodiments are subject-matters of the dependent claims and the following description.

### Disclosure of the Invention

In one aspect, the invention relates to a method for laser cutting a meltable material, comprising heating and melting at least a part of the meltable material at a laser cutting spot by using a laser beam directed towards the laser cutting spot. The method further comprises removing of at least a part of the meltable material molten by the laser beam by using an assist fluid jet, which is at least partially directed towards the laser cutting spot. According to the present invention, the assist fluid jet comprises liquefied carbon dioxide and the assist fluid jet is provided at the laser cutting spot at least partially in a liquid phase and at a higher pressure than an ambient pressure at the laser cutting spot.

In another aspect the invention relates to an apparatus for laser cutting a meltable material, comprising a laser source for emitting a laser beam, wherein the laser source is adapted to direct the laser beam towards a laser cutting spot to heat and melt at least a part of the meltable material at the laser cutting spot. The apparatus further comprises an assist fluid jet source for providing an assist fluid jet, which is at least partially directed towards the laser cutting spot for removing at least a part of the meltable material molten by the laser beam. The assist fluid jet comprises liquefied carbon dioxide and is provided at the laser cutting spot at least partially in a liquid phase and at a higher pressure than an ambient pressure at the laser cutting spot.

In another aspect, the invention relates to a use of a liquid fluid comprising at least 25 Vol-% of liquefied carbon dioxide as an assist fluid for laser cutting.

In yet another aspect, the invention relates to a use of liquefied carbon dioxide as an assist fluid for laser cutting.

Laser cutting particularly includes processes to separate meltable materials by means of laser radiation provided as a laser beam. Laser cutting, however, can include also other processes such as laser drilling, i.e. the formation of holes in a meltable material by means of laser radiation.

A meltable material is to be understood as a material, which at least partially transforms from its solid phase into its liquid phase and/or gaseous phase when heated over its melting temperature. In particular, the laser cutting of the meltable material includes melting partially and/or locally the meltable material by means of a laser beam and/or laser radiation, which is at least partially absorbed by the meltable material. A meltable material can for instance comprise one or more metals and/or consist of a metal and/or an alloy of different metals.

The cutting spot or laser cutting spot is to be understood as a spot at which the meltable material is heated and at least partially melted by the laser beam. For instance the cutting spot, i.e. the laser cutting spot, could be defined as the area of the meltable material, which is molten due to the interaction with the laser beam. The cutting spot can for example have extensions on the micrometer and/or millimeter and/or centimeter range. For obtaining a small cutting spot, the laser beam may be focused to the meltable material.

The invention provides the technical advantage that laser cutting of a meltable material can be performed under water, wherein the water depth, at which the laser cutting is to be performed, is not limited to few meters. Instead, the invention allows laser cutting under water also at a depth of several hundreds of meters and/or even several kilometers, particularly at depths greater than 400 m. Due to the assist fluid comprising liquefied carbon dioxide or even consisting of liquefied carbon dioxide, the assist fluid is less compressible than regular gaseous assist fluids. Therefore, even large ambient pressures due to high water pressures at great water depths may not significantly change the volume and/or the density of the assist fluid to an extent that the laser cutting would become impossible. Changes in the water depth do therefore not necessarily influence the properties of the assist fluid.

Furthermore, the invention provides also the benefit that a heat capacity rate of the assist fluid jet, particularly of the liquefied carbon dioxide, does not significantly change with varying ambient pressure. The heat capacity rate is defined as a product of a mass flow of the assist fluid and the specific heat capacity under a constant pressure and is therefore a measure for a capability of the assist fluid to remove heat from the cutting spot and/or the cutting kerf. A high heat capacity rate of the assist fluid often allows only low cutting speeds, since the heat provided by the laser beam, which is needed for melting the material, is efficiently removed from the cutting spot by the assist fluid jet and thus to a large part dissipated without contributing to the laser cutting. Consequently, using gases as an assist fluid, which exhibit an increasing heat capacity rate at increasing ambient pressure, reduces the cutting speed and the efficiency of the laser cutting process, which results in the need for stronger laser sources for cutting at high speeds. This problem, however, is less pronounced when using the present invention, since due to the assist fluid jet comprising liquefied carbon dioxide the heat capacity rate is less dependent on the ambient pressure and therefore less dependent on the water depth. The invention therefore reduces the requirements for the laser power to be provided for laser cutting deep under water.

Further, the invention provides the advantage that there is no need for special gas compressors for providing the assist fluid, which would need to be able to compress large volumes of gas to a pressure higher than a possibly high ambient pressure of several hundreds of bar around the cutting spot. Instead, the invention merely requires providing an assist fluid comprising liquefied carbon dioxide or even consisting of liquefied carbon dioxide, which allows using pumps having lower technical requirements than compressors for conventional gaseous assist fluids.

Consequently, the invention provides the advantage that providing the assist fluid at high pressures is facilitated more easily as compared to conventional gaseous assist fluids. Typically for laser cutting the assist fluid has to be supplied at least at a pressure exceeding the ambient pressure at the cutting spot by a determined value, such as for instance by 15 bar or 20 bar. Therefore, for example at a water depth of 400 m, the assist fluid has to be provided at about 60 bar, due an ambient pressure of about 40 bar (according to the estimated pressure dependence of about 1 bar per 10 meters of water depth) plus the predetermined 20 bar in excess. If the laser cutting shall be performed in a depth of 5 km, then accordingly the assist fluid has to be provided at a pressure of about 520 bar. Providing a gaseous assist fluid at such high pressures in the respective depth would require extraordinary large volumes of gaseous assist fluid above the water or in shallow depths, wherein the volume would gradually reduce when the gas would be pumped further into the depth until reaching the laser spot. Instead, when using according to the invention an assist fluid comprising liquefied carbon dioxide, the volume difference between the assist fluid above the water or in shallow depths and the volume at the cutting spot is much less pronounced. Therefore, the technical requirements for providing sufficient volume of the assist fluid at the required pressure are greatly reduced.

According to the invention, the assist fluid jet comprises liquefied carbon dioxide and is provided at the laser cutting spot at least partially in a liquid phase and at a higher pressure than an ambient pressure at the laser cutting spot. Particularly, the liquefied carbon dioxide is at least partially in its liquid phase when provided at the laser cutting spot, i.e. when reaching the laser cutting spot. This provides the benefit that carbon dioxide at temperatures and pressures deep under water, i.e. at water depths of 400 m or below, stays in its liquid phase and, thus, sudden evaporation or solidification can be efficiently prevented when the assist fluid comprising or consisting of liquefied carbon dioxide is provided at the laser cutting spot.

Preferably the assist fluid jet consists essentially only of liquid fluid. "Essentially" means that the assist fluid is provided completely in the liquid phase, although it might occur that a small portion of the assist fluid evaporates to the gaseous phase, for instance due to an undesired influence of ambient heat and/or cavitation. This provides the advantage that when providing the whole assist fluid jet in liquid form, the dependence of the volume of the ambient pressure can be minimized and, thus, the dependence of the volume of the assist fluid jet from the water depth can be minimized.

Preferably the meltable material molten by the laser beam is removed from the laser cutting spot in a melt-shear removal process. This allows high cutting speeds. The melt-shear removal process for laser cutting may be based on melting the material preferably due to the high energy input from the laser beam, and removing the melt from the cut by means of a shear force exerted by the flowing assist fluid medium.

Preferably the laser beam is provided as a continuous wave laser beam. This has the advantage that a larger energy density and/or power can be applied to the cutting spot and therefore the melting of the material at the cutting spot can be achieved faster. Particularly, continuous wave laser sources may be available with higher average powers than pulsed laser sources. Preferably the laser beam is at least partially focused onto the cutting spot, which allows increasing the intensity of the irradiated cutting spot independent of the laser power. Preferably the laser beam has an average power of at least 0,5 kW, more preferably of at least 1 kW, much more preferred of at least 2 kW, even more preferred of at least 5 kW, most preferred of at least 10 kW.

Preferably, the assist fluid jet is at least partially directed coaxially with the laser beam. This allows providing a compact setup for the assist fluid jet and/or the laser cutting apparatus.

Preferably the assist fluid jet comprises at least 50 Vol-% of liquefied carbon dioxide. Most preferably, the assist fluid jet essentially consists of carbon dioxide. "Essentially consists" is to be understood in a manner that the assist fluid jet is provided as pure liquefied carbon dioxide but may, nevertheless, comprise impurities, which might originate in its production process or its storage. The use of liquefied carbon dioxide as assist fluid provides the technical advantage that liquefied carbon dioxide exists in the liquid phase under the conditions predominantly prevailing when performing laser cutting deep under water. Even at great water depths of more than 400 m, the water temperature typically ranges between 1°C and 5°C, m ostly around 4°C, since water has the highest density at a temperature around 4°C. The ambient pressure underwater increases with increasing depth and has a value of about 40 bar at the depth of 400 m. As known from commonly available pressure temperature diagrams of carbon dioxide (as will be discussed below with reference to the drawings), in the relevant temperature range and in the pressure range of water in the depth 400 m down to an only theoretically relevant depth of 30 km carbon dioxide is present in its liquid phase. Since the deepest part of any ocean on earth has a maximum depth of approximately 11 km and an average depth of oceans is about 4 km, liquefied carbon dioxide offers full flexibility regarding the water depth for deep-underwater laser cutting at the depth of 400 m and more. Further, carbon dioxide office for the benefit that there is no risk in the relevant temperature and pressure range that carbon dioxide will turn at least partially into its solid-state phase and would possibly cause obstructions and or blockages of tubings and the assist fluid jet.

Particularly, liquefied carbon dioxide has further benefit that it offers more attractive characteristics as an assist fluid for laser cutting than conventional assist fluids, such as water or nitrogen. In one aspect, the benefit of carbon dioxide is a more advantageous heat capacity rate as compared to conventional assist fluids. In another aspect, it is the advantage of using carbon dioxide that under the temperatures and pressures prevailing at deep-underwater laser cutting, carbon dioxide naturally exists in its liquid phase. In contrast, many regular assist fluids, such as air, oxygen, nitrogen, argon and helium naturally exist in their gaseous phase at these conditions and therefore would require a higher technical effort for being used within an assist fluid jet.

Further, while under deep underwater conditions, particularly at great depths of 400 m and more, the partial pressure of oxygen in many gas mixtures, for instance in air, can reach problematic values, at which the oxygen would lead to a spontaneous combustion and or corrosion of almost any metallic materials exposed to the assist fluid jet. This disadvantage of oxygen is effectively prevented when using liquefied carbon dioxide within or as the assist fluid jet.

Moreover, in contrast to the use of noble gases, such as argon or helium, liquefied carbon dioxide can be provided in abundancy at low costs and therefore provides an easily available and financially affordable assist fluid for deep-underwater laser cutting. Particularly due to the fact that when using a gaseous assist fluid, such as argon or helium, at great water depth with the prevailing high water pressures, the volumes or amounts of such noble gases required for the assist fluid jet would lead to tremendous costs, which can effectively be prevented by using liquefied carbon dioxide.

In addition, liquefied carbon dioxide also provides the advantage over the use of nitrogen as an assist gas that liquefied carbon dioxide unlike nitrogen does not significantly inhibit the cutting process due to heat removal from the cutting process by convection and therefore reduces the requirements regarding laser power and allows higher cutting speeds as compared to assist fluids based on nitrogen.

Using liquefied carbon dioxide as assist fluid for laser cutting also provides advantages over the use of water as assist fluid. Although water would be available in abundancy around the cutting spot at the ambient pressure, the use of ambient water as assist fluid has the disadvantage that such water always contains contaminations, unless an elaborate filtering of the water in order to block contaminations, such as submicron particles, will be performed. However, regular replacement of such submicron particle filters would be required, which is typically not possible at great water depths. Therefore, the whole apparatus for laser cutting would be required to be raised to the water surface, each time such filters need to be replaced. In addition, many salts, dissolved minerals and/or solid contents of ambient water, when used as an assist fluid, would quickly damage various optical components required for guiding and or focusing the high-powered laser beam, when brought into contact with the ambient water. Also these disadvantages can be overcome when using liquefied carbon dioxide as the assist fluid, since liquefied carbon dioxide can be easily provided with a desired purity for operating an assist fluid jet of a laser cutting apparatus. In addition, water has the highest heat capacity rate among all of the conventionally used assist fluids. The heat capacity rate is the quantity of heat a flowing fluid of a certain mass flow rate is able to absorb or release per unit temperature change per unit time. This means that water leads to a very efficient, undesired cooling of the cutting spot or the cutting kerf, and therefore would require very high laser power for the laser cutting to compensate for the heat dissipated by the water assist fluid jet. Also this disadvantage can be overcome by using liquefied carbon dioxide, since the heat capacity rate of liquefied carbon dioxide is significantly lower than the heat capacity rate of water.

The following Table 1 shows the parameters density, the specific heat at a constant pressure and the relative heat capacity rage by volume for water (H₂O), carbon dioxide (CO₂) and nitrogen (N₂) at different water depths.

**Table 1**

| Depth [m] | approx. Pressure [bar] | Density [kg/m³] | | | Specific heat at const. pressure Cp [J/kg·K] | | | Heat capacity rate per m³/s flow rate (Cp x density) [W/K] | | |
|---|---|---|---|---|---|---|---|---|---|---|
| | | H₂O | CO₂ | N₂ | H₂O | CO₂ | N₂ | H₂O | CO₂ | N₂ |
| 400 | 40 | 1001 | 925 | 40 | 4,2 | 2,54 | 1,12 | 4204 | 2350 | 45 |
| 1000 | 100 | 1004 | 969 | 125 | 4,17 | 2,19 | 1,24 | 4187 | 2122 | 155 |
| 4000 | 400 | 1019 | 1078 | 394 | 4,06 | 1,79 | 1,42 | 4137 | 1930 | 559 |
| 10000 | 1000 | 1045 | 1184 | 601 | 3,91 | 1,64 | 1,39 | 4086 | 1942 | 835 |

As can be understood from the values in Table 1, the relative heat capacity rates of water: carbon dioxide : nitrogen are
93:52:1 at 400 m,
7:4:1 at 4000 m, and
5:2:1 at 10000 m.

Thus, at increasing water depth there is only a modest difference between nitrogen and carbon dioxide in terms of the heat capacity rate, but a rather large gap between the heat capacity rates of nitrogen and water. Therefore, also in this respect carbon dioxide offers advantageous properites over water as an assist fluid to be used in an assist fluid jet.

Further advantages and preferred embodiments of the invention are disclosed in the following description and figures.

It is understood by a person skilled in the art that the preceding and the following features are not only disclosed in the detailed combinations, but that also other combinations or the features alone can be used without exceeding the scope of the present invention.

The invention will now be further described with reference to the accompanying drawings showing a preferred embodiment.

### Brief description of the drawings

- Fig. 1: depicts a pressure-temperature diagram 10 of carbon dioxide.
- Fig. 2: shows in schematic scheme an apparatus for laser cutting according to a preferred embodiment of the invention.

### Detailed description of the drawings

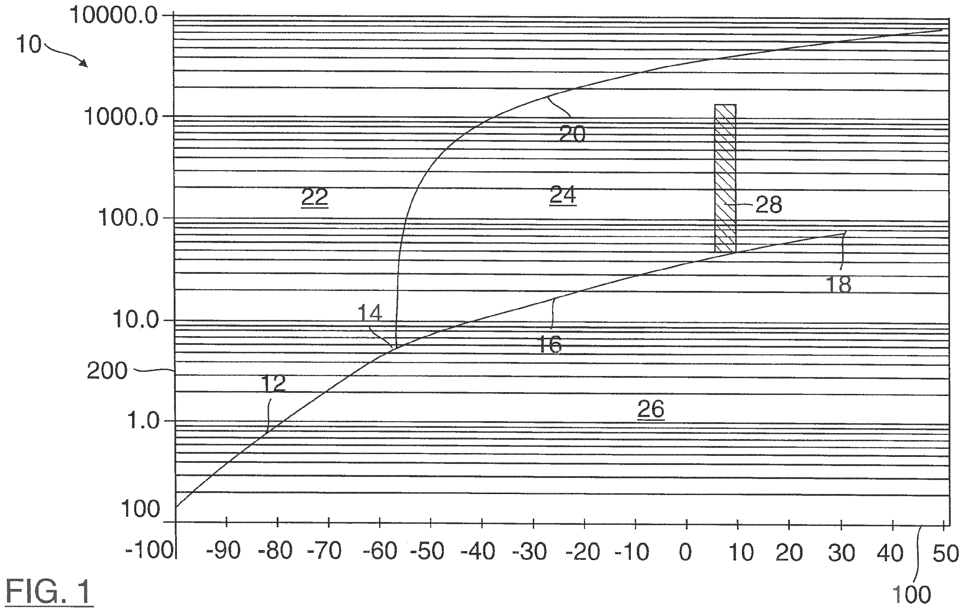

Figure 1 depicts a pressure-temperature diagram 10 of carbon dioxide, wherein the horizontal axis 100 indicates the temperature on a linear scale in degree Celsius (centigrade) and the vertical axis 200 indicates the pressure in bar on a logarithmic scale.

The graph comprises essentially three parts, which is the sublimation line 12 reaching up to the triple point 14, the saturation line 16 extending between the triple point 14 and the critical point 18, and the melting line 20, extending from the triple point 14 towards higher pressures and higher temperatures. The area 22 above the sublimation line and to the left of the melting line indicates a parameter range, in which carbon dioxide exists only in the solid phase. The area 24 between the melting line 20 and the saturation line 16 indicates a parameter range, in which carbon dioxide exists only in the liquid phase. Finally, area 26 indicates a parameter range, in which carbon dioxide exists only as vapor, i.e. in the gaseous phase. Beyond the critical temperature (to the right of the critical point) the carbon dioxide becomes a gas and areas 24 and 26 merge.

Further, the rectangle 28 indicates a relevant parameter range for deep-underwater laser cutting, which covers a pressure range from 40 bar upwards, which corresponds to water depth of about 400 meters downwards, and a temperature range from about 0°C to 5°C, which reflects typical water temperatur es in the depth of oceans. As can be seen, the whole parameter range covered by the rectangle 28 is located within area 24 and consequently in this whole parameter range carbon dioxide exists in its liquid state.

Therefore, carbon dioxide is well suited as a liquid or liquefied assist fluid for deep-underwater laser cutting, since under the prevailing pressures and temperatures at a depth of 400 m or below there is no risk of sudden evaporation or solidification, which could lead to a malfunction of the assist fluid jet.

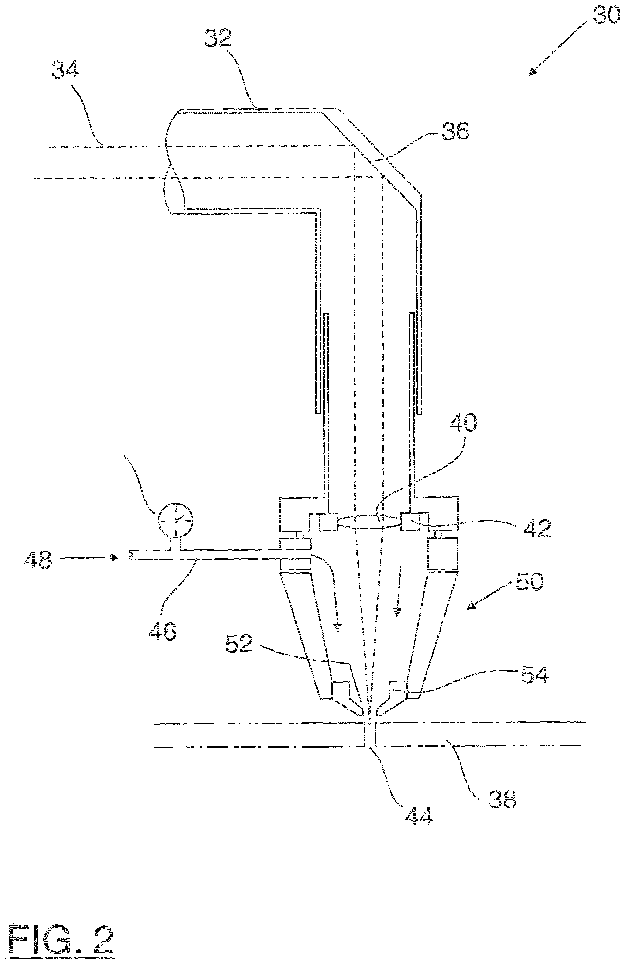

Figure 2 shows a laser cutting apparatus 30 according to a preferred embodiment of the invention. The apparatus 30 comprises a tube 32 for housing a propagating, collimated laser beam 34 and one or more optical elements, such as a mirror 36, for directing the laser beam 34 towards the workpiece 38. The laser beam may be provided by a laser source (not shown). Additionally or alternatively to the tubes for housing the propagating laser beam 34, optical fibers (not shown) can be used in which the laser beam is guided towards the workpiece 38 by means of total internal reflection. Furthermore, the apparatus 30 comprises a focusing element, which according to the shown embodiment comprises an optical lens 40 mounted in the lens mount 42, to focus the laser beam 34 at least partially onto a cutting spot 44 at the workpiece 38.

In addition, the apparatus 30 comprises an assist fluid supply tube 46, which is supplied by an assist fluid source (not shown) with an assist fluid 48 comprising liquefied carbon dioxide, and which directs the assist fluid towards a laser cutting head. The laser cutting head 50 comprises particularly a nozzle 54 for generating an assist fluid jet 52 of assist fluid 48 streaming towards the laser cutting spot 44 in order to remove molten material of the workpiece 38 made of meltable material by means of melt-shearing, which has been at least partially molten by the laser 34. The assist fluid supply tube 46 may further comprise a pressure indicator 56 for indicating the pressure of the assist fluid 48 within the assist fluid supply tube 46. The arrows within the laser cutting head 50 indicate an exemplary streaming direction of the assist fluid 48.

Although the shown embodiment comprises an assist fluid jet 52 and an assist fluid supply requiring the laser beam 34 to propagate through the assist fluid 48 within the laser cutting head 50, in other embodiments the laser cutting head 50 may comprise integrated channels for guiding the assist fluid 48 towards the nozzle 54, preferably coaxially, around the optical axis of the focused laser beam 34. This could provide the benefit, that the laser beam is not required to propagate through the assist fluid containing liquefied carbon dioxide and thus may prevent optical distortions of the laser beam 34 and in particular its wave front when propagating towards the cutting spot 44.

### Reference signs

- 10: pressure-temperature diagram of carbon dioxide
- 12: sublimation line
- 14: triple point
- 16: saturation line
- 18: critical point
- 20: melting line
- 22: area of parameter range for solid carbon dioxide
- 24: area of parameter range for liquid carbon dioxide
- 26: area of parameter range for gaseous carbon dioxide
- 28: rectangle indicating parameter range for deep-underwater laser cutting
- 30: laser cutting apparatus
- 32: tube
- 34: laser beam
- 36: mirror
- 38: workpiece
- 40: optical lens
- 42: lens mount
- 44: cutting spot
- 46: supply tube
- 48: assist fluid
- 50: laser cutting head
- 52: assist fluid jet
- 54: nozzle
- 56: pressure indicator
- 100: temperature axis (linear)
- 200: pressure axis (logarithmic)

## Claims

1. Method for laser cutting a meltable material, comprising the steps:
- heating and melting at least a part of the meltable material at a laser cutting spot (44) by using a laser beam (34) directed towards the laser cutting spot (44);
- removing at least a part of the meltable material molten by the laser beam (34) by using an assist fluid jet (44), which is at least partially directed towards the laser cutting spot;
wherein the assist fluid jet (52) comprises liquefied carbon dioxide and wherein the assist fluid jet (52) is provided at the laser cutting spot (44) at least partially in a liquid phase and at a higher pressure than an ambient pressure at the laser cutting spot (44).

2. Method according to claim 1, wherein the method is a method for laser cutting at a water depth of at least 400 m and/or wherein the ambient pressure is at least 35 bar.

3. Method according to claim 1 or 2, wherein the assist fluid jet (52) consists of liquid fluid.

4. Method according to any one of the preceding claims, wherein the meltable material molten by the laser beam (34) is removed from the laser cutting spot (44) in a melt-shear removal process.

5. Method according to any one of the preceding claims, wherein the laser beam (34) is provided as a continuous wave laser beam.

6. Method according to any one of the preceding claims, wherein the laser beam (34) has an average power of at least 0,05 kW.

7. Method according to any one of the preceding claims, wherein the assist fluid jet (52) comprises at least 50 Vol-% of liquefied carbon dioxide and/or essentially consists of carbon dioxide.

8. Method according to any one of the preceding claims, wherein the method is a method for laser cutting under water and wherein the ambient pressure is essentially defined by the pressure of the water surrounding the laser cutting spot (44).

9. Apparatus (30) for laser cutting a meltable material, comprising:
- a laser source for emitting a laser beam (34), wherein the laser source is adapted to direct the laser beam (34) towards a laser cutting spot (44) to heat and melt at least a part of the meltable material at the laser cutting spot (44);
- an assist fluid jet source for providing an assist fluid jet (52), which is at least partially directed towards the laser cutting spot (44) for removing at least a part of the meltable material molten by the laser beam (34);
wherein the assist fluid jet (52) comprises liquefied carbon dioxide and wherein the assist fluid jet is provided at the laser cutting spot (44) at least partially in a liquid phase and at a higher pressure than an ambient pressure at the laser cutting spot (44).

10. Apparatus according to claim 9, wherein the assist fluid jet (52) is at least partially directed coaxially with the laser beam (34).

11. Apparatus according to claim 9 or 10, wherein the laser source is a continuous wave laser source and/or wherein the laser beam (34) has an average power of at least 0,05 kW.

12. Use of a fluid comprising at least 25 Vol-% of liquefied carbon dioxide as an assist fluid (48) for laser cutting.

13. Use of liquefied carbon dioxide as an assist fluid (48) for laser cutting.

14. Use according to claim 12 or 13, wherein the assist fluid (48) jet is provided at a laser cutting spot (44) at a higher pressure than an ambient pressure at the laser cutting spot (44).
